# EUROPÄISCHE PATENTANMELDUNG

(11) **EP 1 108 352 A1**
(43) Veröffentlichungstag der Anmeldung: **20.06.2001**
(21) Anmeldenummer: 00126907.5
(22) Anmeldetag: 08.12.2000
(51) Int. Cl.: A01D 78/10

(54) **Heuwerbungsmaschine, insbesondere Vierkreiselschwader**

(30) Priorität: 15.12.1999 DE 19960662
(71) Anmelder: NIEMEYER Landmaschinen GmbH, D-48477 Hörstel-Riesenbeck (DE)
(72) Erfinder: Ungruh, Josef, 48429 Rheine (DE)

(57) **Zusammenfassung**

Heuwerbungsmaschine, insbesondere zum Schwaden von landwirtschaftlichem Halmgut, mit vier um vertikale Achsen umlaufend angetriebenen und sich über Stützräder eines Fahrwerks (13) gegenüber dem Erdboden abstützende Rechkreisel (3,3',4,4'), welche mit Rechzinken bestückt sind und gesteuerte Zinkenarme aufweisen und einem Fahrgestell (5), welches über ein Kuppelglied (8) mit dem Traktor (2) kuppelbar ist und einem Hauptträger (10) als Teil des Fahrgestells (5), wobei das Fahrgestell (5) über Laufräder (12) gegenüber dem Erdboden abgestützt ist, wobei jedem Rechkreisel (3,3',4,4') ein separater Ausleger mit einem Horizontalgelenk (15,15'), mit einer fahrtrichtungsparallelen Klappachse (14,14'), mit je einem Druckmittelzylinder (16,16') zum Hoch- oder Herunterklappen der Rechkreisel (3,3'4,4') zugeordnet ist, so dass jeder Rechkreisel (3,3',4,4') über seinen ihm zugeordneten hydraulischen Druckmittelzylinder aus einer etwa horizontalen Arbeitsstellung in eine zumindest annähernd vertikale Transportstellung und zurückbringbar ist, wobei jedem Rechkreiselpaar bestehend aus den Rechkreiseln (3,4) bzw. (3',4') ein jedem Rechkreiselpaar gemeinsamer innerer Ausleger (6 bzw. 6') zugeordnet ist.

## Beschreibung

Die Erfindung betrifft einen Kreiselschwader mit vier Rechkreiseln nach dem gattungsbildenden Oberbegriff des Anspruchs 1.

In der Patentschrift DE 197 16 379 C1 ist ein Vierkreiselschwader nach dem gattungsbildenden Oberbegriff des Anspruchs 1 dargestellt. Demzufolge ist jeder Rechkreisel mit einem ihm zugeordneten um horizontale Klappachsen schwenkbaren Ausleger mit dem Fahrgestell verbunden.

Aufgabe der Erfindung ist es, einen Vierkreiselschwader zu schaffen, der in seiner konstruktiven Ausbildung mit einfachen Mitteln kostengünstig gestaltet werden kann, welches seine Wirtschaftlichkeit gegenüber vergleichbaren Vierkreiselschwadern verbessert.

Gelöst wird diese Aufgabe mit den Merkmalen des kennzeichnenden Teils des Anspruchs 1. Weitere Vorteile und Ausgestaltungen nach der Erfindung sind der nachfolgenden Beschreibung, den Zeichnungen und den Ansprüchen 2 bis 11 zu entnehmen.

Bezugszeichenliste
- 1 -: Vierkreiselschwader
- 2 -: Traktor
- 3,3' -: innerer Rechkreisel
- 4,4' -: äußerer Rechkreisel
- 5-: Fahrgestell
- 6,6' -: innerer Ausleger
- 7,7' -: äußerer Ausleger
- 8-: Kuppelglied
- 9-: Hochachse
- 10 -: Hauptträger
- 11 -: Portalfahrwerk
- 12 -: Laufräder
- 13,13' -: Fahrwerk
- 14,14' -: Klappachsen
- 15,15' -: Horizontalgelenk
- 16,16' -: Druckmittelzylinder
- 17,17' -: Parallelogrammlenker
- 18,18' -: Hochachse
- 19 -: Schwenkgelenk
- 20 -: Abstand
- 21,21' -: Auslegerarm
- 22,22' -: Auslegerarm
- 23,23' -: Schwenkgelenk
- 24,24' -: Hochachse
- 25,25' -: Drehrichtung
- 26,26' -: Endgabeln
- 27,27' -: Querstrebe
- 28 -: Erdboden
- F -: Fahrtrichtung

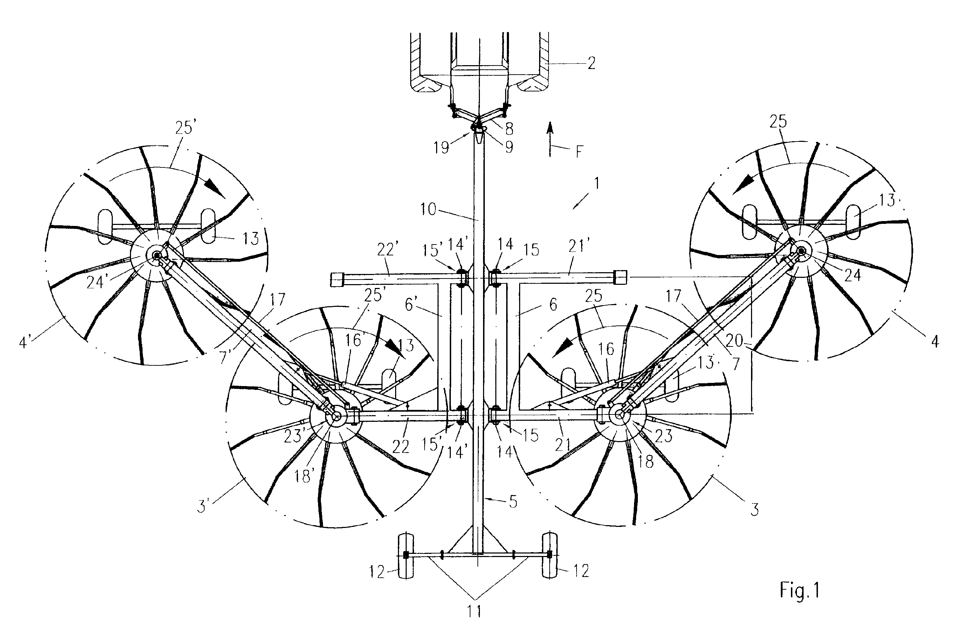

Fig. 1 zeigt einen gezogenen Vierkreiselschwader 1 in Arbeitsstellung in der Draufsicht auf die Arbeitsebene nach der Erfindung, angehängt an einen Traktor 2 in Fahrtrichtung F. Der Vierkreiselschwader 1 besteht im wesentlichen aus dem Fahrgestell 5, dem Kupplungsglied 8 zum Anschluß an die Unterlenker eines Traktors 2, dem Portalfahrwerk 11 am hinteren Ende des Fahrgestells 5, den inneren Auslegern 6,6', den äußeren Auslegern 7,7', den inneren Rechkreiseln 3,3', den äußeren Rechkreiseln 4,4' und den Fahrwerken 13,13', auf denen sich jeweils die inneren Rechkreisel 3,3',4,4' gegenüber dem Boden in der Arbeitsstellung abstützen. Die Rechkreisel 3,3',4,4' sind in bekannte Weise mit durch eine Kurvenbahn gesteuerten Zinkenarmen mit Rechzinken bestückt.

Das Fahrgestell 5 besteht im wesentlichen aus dem Hauptträger 5, beispielsweise ausgebildet als Hohlprofil, wobei der Hauptträger 10 an seinem vorderen Ende mittels eines Schwenkgelenks 19 um die Hochachse 9 verschwenkbar mit dem Kupplungsglied 8 verbunden ist, und am hinteren Ende mit dem Portalfahrwerk 11 starr verbunden ist.

Ein Teil der Gewichtskräfte des Fahrgestells 5 wird somit von den Unterlenkern des Traktors 2 und damit vom Traktor, und ein anderer Teil von den Laufrädern 12 des Portalfahrwerks 11, gegenüber dem Boden abgestützt.

Die inneren Ausleger 6,6' sind mittels Horizontalgelenken 15,15' um in Fahrtrichtung F verlaufende Klappachsen 14,14' hochklappbar mit dem Hauptträger 10 verbunden. Jeder der inneren Ausleger 6,6' besitzt zwei Horizontalgelenke 15,15 bzw. 15',15', die im Abstand 20 zueinander angeordnet sind. Jeder der inneren Ausleger besteht aus zwei Auslegerarmen 21,21';22,22', wobei am freien Ende der Auslegerarme 21,22 jeweils der innere Rechkreisel 3,3' um ihre jeweilige Hochachse 18,18' dreh- und antreibbar gelagert sind. Die Hochachsen 18,18' bilden gleichzeitig die Schwenkachsen für die Schwenkgelenke 23,23' der äußeren Ausleger 7,7', an deren freien Enden die äußeren Rechkreisel 4,4' um ihre jeweilige Hochachse 24,24' dreh- und antreibbar gelagert sind.

Die Schwenkgelenke 23,23' werden dabei überbrückt durch die Druckmittelzylinder 16,16', so dass durch die Betätigung des Druckmittelzylinders 16,16' durch Druckbeaufschlagung die äußeren Ausleger 7,7' um die Hochachsen 18,18' verschwenkt werden können. Dabei können die Druckmittelzylinder 16,16' mittels entsperrbarer Zwillingsrückschlagventile so angesteuert werden, dass ihre jeweiligen Kolbenstangen hydraulisch eingespannt sind, so dass die Schwenkgelenke 23,23' festgesetzt, das heißt in ihrer eingestellten Arbeits- oder Transportstellung überbrückt werden können.

Desweiteren werden die Fahrwerke 13,13' der äußeren Rechkreisel 4,4' mittels eines Parallelogrammlenkers 17,17' in ihrem Spurverhalten und damit in ihrer Fahrtrichtung gesteuert.

Die Drehrichtungen der Rechkreisel 25,25' sind seitenweise, d.h. links des Hauptträgers bzw. rechts des Hauptträgers gegenläufig zueinander, so dass der Vierkreiselschwader 1 einen Mittelschwad erzeugen kann.

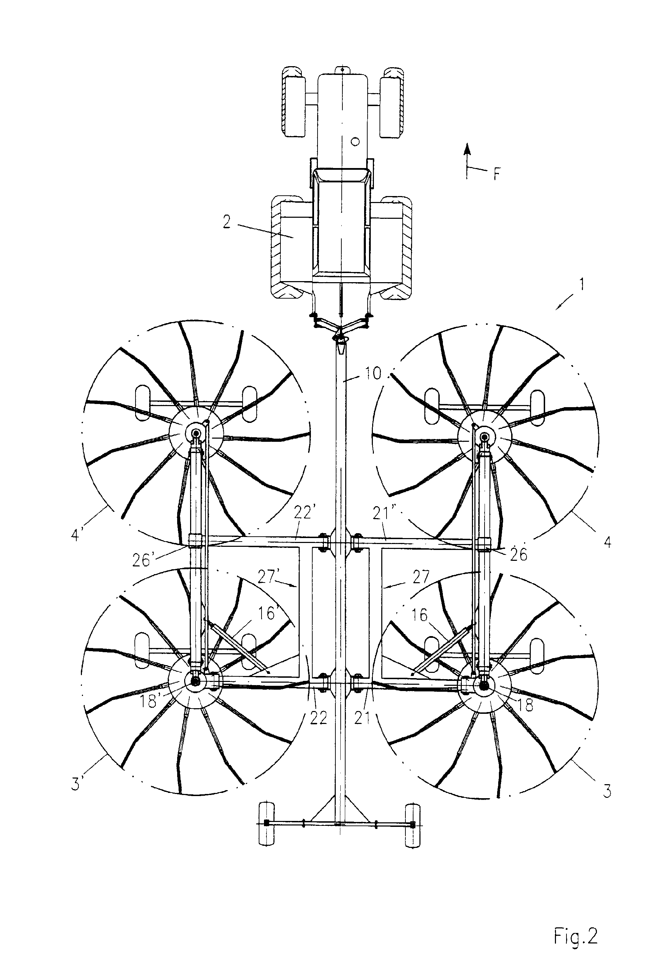

Fig. 2 zeigt den Vierkreiselschwader 1 in einer Zwischenstellung als Ausgangsstellung zum Hochklappen der Rechkreisel 3,3',4,4'. Dabei wurde der Vierkreiselschwader 1 aus seiner Arbeitsstellung durch Betätigung der Druckmittelzylinder 16,16' in diese Zwischenstellung überführt, indem die äußeren Rechkreisel 4,4' einschließlich der äußeren Ausleger 7.7' um die Hochachsen 18,18' der Schwenkgelenke 23,23' soweit nach innen verschwenkt wurden, dass die äußeren Ausleger 7,7' etwa parallel zum Hauptträger 10 ausgerichtet sind. Die freien Enden der Auslegerarme 21',22' sind gabelförmig ausgebildet und dienen den äußeren Auslegern 7,7' gleichzeitig als Endanschlag. Die Endgabeln 26,26' umfassen dabei den jeweiligen äußeren Ausleger 7,7', der zweckmäßigerweise als Vierkanthohlprofil ausgebildet ist.

Dabei sind die Endgabeln 26,26' U-förmig derart ausgebildet, dass die jeweils zur nach außen vom Hauptträger 10 abgewandten Seite offen sind, so dass die äußeren Ausleger 7,7' horizontal in die offene Endgabel 26,26' einschwenken können. Die Auslegerarme 21,21' bzw. 22,22' sind untereinander mittels einer Querstrebe 27,27' verbunden, so dass die Auslegerarme 21,21';22,22' eine stabile Einheit als innere Ausleger 6,6' bilden, so dass die inneren Ausleger 6,6' von einem, aus Gründen der Übersichtlichkeit nicht dargestellten, Druckmittelzylinder um die Klappachsen 14,14' in ihre Transportstellung hochgeschwenkt werden können.

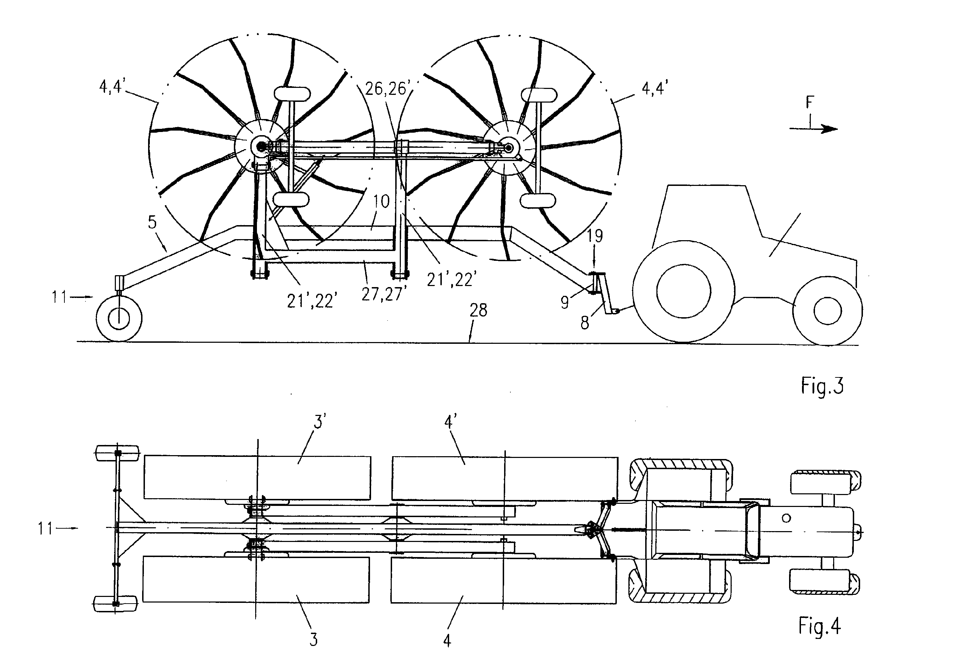

Fig. 3 zeigt den Vierkreiselschwader 1 in einer Seitenansicht in Fahrtrichtung F mit hochgeklappten Kreiseln 3,3' in Transportstellung.

Fig. 4 zeigt den Vierkreiselschwader 1 in einer Draufsicht auf die Erdboden 28 in Fahrtrichtung F mit hochgeklappten Kreiseln 3,3' in Transportstellung gemäß Fig. 3. Dabei sind die hochgeklappten Kreisel 3,3';4,4' als Konturen vereinfacht dargestellt.

## Patentansprüche

1. Heuwerbungsmaschine, insbesondere zum Schwaden von landwirtschaftlichem Halmgut, mit vier um vertikale Achsen umlaufend angetriebenen und sich über Stützräder eines Fahrwerks (13) gegenüber dem Erdboden abstützende Rechkreisel (3,3',4,4'), welche mit Rechzinken bestückt sind und gesteuerte Zinkenarme aufweisen und einem Fahrgestell (5), welches über ein Kuppelglied (8) mit dem Traktor (2) kuppelbar ist und einem Hauptträger (10) als Teil des Fahrgestells (5), wobei das Fahrgestell (5) über Laufräder (12) gegenüber dem Erdboden abgestützt ist, wobei jedem Rechkreisel (3,3',4,4') ein separater Ausleger mit einem Horizontalgelenk (15,15'), mit einer fahrtrichtungsparallelen Klappachse (14,14'), mit je einem Druckmittelzylinder (16,16') zum Hoch- oder Herunterklappen der Rechkreisel (3,3'4,4') zugeordnet ist, so dass jeder Rechkreisel (3,3',4,4') über seinen ihm zugeordneten hydraulischen Druckmittelzylinder aus einer etwa horizontalen Arbeitsstellung in eine zumindest annähernd vertikale Transportstellung und zurückbringbar ist, **dadurch gekennzeichnet**, dass jedem Rechkreiselpaar 5 bestehend aus den Rechkreiseln (3,4) bzw. (3',4') ein jedem Rechkreiselpaar gemeinsamer innerer Ausleger (6 bzw. 6') zugeordnet ist.

2. Heuwerbungsmaschine nach Anspruch 1, **dadurch gekennzeichnet**, dass jedem Rechkreiselpaar (3,4) oder (3',4') ein Verbindungsträger als äußerer o Ausleger (7,7') zugeordnet ist.

3. Heuwerbungsmaschine nach Anspruch 1 und 2, **dadurch gekennzeichnet**, dass der jeweils äußere Ausleger (7,7') in einem Schwenkgelenk (23,23') mit der Hochachse (18,18') um diese horizontal von seiner Transportstellung in seine Arbeitsstellung und umgekehrt verschwenkbar ist.

4. Heuwerbungsmaschine nach Anspruch 1 bis 3, **dadurch gekennzeichnet**, dass die Hochachse (18,18') des jeweiligen Schwenkgelenks (23,23') mit der Kreiselachse der inneren Rechkreisel (3,3') identisch ist.

5. Heuwerbungsmaschine nach Anspruch 1 bis 4, **dadurch gekennzeichnet**, dass die Schwenkgelenke (23,23') mittels Druckmittelzylinder (16,16') überbrückt sind, wobei diese Druckmittelzylinder (16,16') als Stellantriebe zur Überführung der äußeren Rechkreisel (4,4') von der Transport- in die Arbeitsstellung dienen.

6. Heuwerbungsmaschine nach Anspruch 1 bis 4, **dadurch gekennzeichnet**, dass die Schwenkgelenke (23,23') mittels Druckmittelzylinder (16,16') überbrückt sind und als Feststelleinrichtungen zur Arretierung der äußeren Rechkreisel (4,4') in ihrer Arbeits- oder Transportstellung dienen.

7. Heuwerbungsmaschine nach Anspruch 1 bis 6, **dadurch gekennzeichnet**, dass die inneren Ausleger (6,6') aus zwei in Abstand (20) zueinander angeordneten Auslegerarmen (21,21') bzw. (22,22') bestehen.

8. Heuwerbungsmaschine nach Anspruch 1 bis 6, **dadurch gekennzeichnet**, dass die inneren Ausleger (6,6') mittels zwei in Abstand (20) zueinander angeordneten Horizontalgelenken (15,15') mit dem Hauptträger (10) verbunden sind.

9. Heuwerbungsmaschine nach Anspruch 1 bis 8, **dadurch gekennzeichnet**, dass die Auslegerarme (21,21') bzw. (22,22') der inneren Ausleger (6,6') als starre Einheit zusammengefügt untereinander verbunden sind.

10. Heuwerbungsmaschine nach Anspruch 1 bis 9, **dadurch gekennzeichnet**, dass die Auslegerarme (21,21') bzw. (22,22') der inneren Ausleger (6,6') an ihrem freien Ende Endgabeln (26,26') aufweisen, welche die äußeren Ausleger (7,7') in ihrer Transportstellung teilweise übergreifen.

11. Heuwerbungsmaschine nach Anspruch 1 bis 10, **dadurch gekennzeichnet**, dass die Fahrwerke (13,13') eines Rechkreiselpaares bestehend aus den Rechkreiseln (3,4) bzw. (3',4') mittels Parallelogrammlenker (17,17') untereinander in Lenkverbindung stehen.
